# DEMANDE DE BREVET EUROPEEN

(11) **EP 1 574 851 A2**
(43) Date de publication de la demande: **14.09.2005**
(21) Numéro de dépôt: 05290301.0
(22) Date de dépôt: 10.02.2005
(51) Int. Cl.: G01N 30/84

(54) **Installation de séparation de composants dans plusieurs voies parallèles**

(30) Priorité: 03.03.2004 FR 0402205
(71) Demandeur: Bionisis, 92350 Le Plessis Robinson (FR)
(72) Inventeur: Kerhuel, Martin, 75007 Paris (FR); Manach, Michel, 92190 Meudon (FR)
(74) Mandataire: Ramey, Daniel

(57) **Abrégé**

Installation de séparation de composants, en particulier par chromatographie liquide sous pression dans plusieurs voies parallèles, dont les sorties (18) sont reliées par des moyens commandés (22) de liaison sélective aux entrées de moyens parallèles (20) de stockage temporaire dont les sorties sont reliées par des moyens commandés (24) de liaison sélective à des conduits (26) de dépôt dans des moyens de collecte (28) ou à des moyens de rejet (30).

## Description

L'invention concerne une installation de séparation de composants dans une pluralité de voies parallèles en particulier par chromatographie liquide sous pression, électrophorèse capillaire ou tout autre technique de séparation de composants dans des conduits.

Une telle installation de séparation permet notamment de purifier un composant donné ou d'extraire les composants d'un mélange.

Le développement des moyens de synthèse de molécules chimiques à haut débit, le développement des techniques de synthèse parallèle et l'accroissement des études sur la biodiversité et sur les plantes médicinales entraînent un besoin de purification de molécules toujours plus important.

Les systèmes de séparation par chromatographie liquide sous pression dans des voies parallèles répondent à ce besoin. La collecte des composants séparés dans les différentes voies est effectuée au moyen de récipients appropriés placés à la sortie de chaque voie et de bras mobiles portant chacun la sortie d'une voie de séparation et déplacés pour déposer dans des récipients différents les divers composants sortant de cette voie.

Les composants séparés dans les différentes voies ne sortent pas nécessairement de ces voies en même temps et leur collecte doit être commandée de façon indépendante pour chaque voie, en fonction du temps, du volume ou des signaux provenant d'un ou de plusieurs détecteurs.

Il faut disposer d'un espace important en sortie des voies de séparation pour la mise en place des bras mobiles et des récipients de collecte, et il faut faire passer les composants séparés dans des tubes capillaires relativement longs correspondant au plus grand volume de composant séparé à collecter, ce qui favorise un remélange dans ces tubes capillaires des composants qui ont été séparés dans les voies de séparation. La sélection, la collecte et le rejet des composants séparés dans les différentes voies deviennent très vite complexes et difficiles à réaliser dès que le nombre de voies de séparation en parallèle augmente.

Une possibilité serait de collecter les composants simultanément sur toutes les voies en parallèle en fonction du temps ou du volume, mais cela se traduirait par un remélange d'au moins certains des composants.

De façon classique, la détection du passage des composants séparés dans une voie est réalisée par des moyens de mesure d'absorption d'un rayonnement lumineux, par exemple ultraviolet. Cette détection permet de déterminer, en un point donné d'une voie de séparation, le début et la fin du passage d'un composant et également sa concentration.

Pour disposer d'une information supplémentaire sur les composants qui passent dans les voies de séparation, on a proposé d'associer à un système de chromatographie liquide à plusieurs voies parallèles de séparation, un détecteur du type à spectrométrie de masse, à diffusion de lumière, ou autre, qui détruit l'échantillon analysé. Dans un dispositif connu, ce détecteur est alimenté en parallèle depuis les différentes voies de séparation et les échantillons à analyser sont traités tour à tour dans le détecteur au moyen d'un barillet rotatif à plusieurs canaux prévu dans le détecteur. Les informations fournies par ce détecteur correspondent aux masses moléculaires des composants et sont utilisées pour caractériser les composants collectés et décider de leur collecte ou de leur rejet à l'égout. Toutefois, ce dispositif connu a pour inconvénient d'être complexe et très coûteux et il ne permet pas d'éviter les inconvénients précités liés à la difficulté de collecter des composants séparés sortant d'une pluralité de voies parallèles de séparation.

La présente invention a notamment pour but d'apporter une solution simple, efficace et économique à ce problème.

Elle a pour objet une installation de séparation de composants, en particulier par chromatographie liquide sous pression dans une pluralité de voies parallèles, cette installation permettant de sélectionner à volonté, parmi les composants séparés dans les différentes voies, ceux que l'on souhaite conserver et ceux que l'on rejette, et de collecter avec précision les composants à conserver sans risque de remélange de ces composants au moment de leur collecte.

Elle propose à cet effet une installation du type précité, comprenant une pluralité de voies parallèles de séparation, des moyens de détection du passage des composants dans les voies de séparation et des moyens de collecte d'au moins certains composants en sortie des voies de séparation, caractérisé en ce qu'elle comprend, entre la sortie de chaque voie de séparation et les moyens de collecte, au moins deux moyens parallèles de stockage temporaire de liquide, des premiers moyens commandés de liaison sélective de la sortie de la voie de séparation à l'entrée de l'un ou de l'autre des moyens de stockage, des seconds moyens commandés de liaison sélective des sorties des moyens de stockage aux moyens de collecte ou à des moyens d'évacuation, et des moyens de commande générant des signaux de commande des moyens de liaison sélective à partir de signaux de sortie des moyens de détection.

Les moyens parallèles de stockage temporaire qui sont reliés à la sortie de chaque voie de séparation permettent de transformer les flux continus de sortie des voies de séparation en une distribution sélective discontinue des composants séparés vers des moyens de collecte ou des moyens de rejet, ce qui facilite et simplifie beaucoup la collecte des composants séparés.

Les différents composants sortant des différentes voies de séparation, qui sont stockés séparément les uns des autres dans les moyens parallèles de stockage temporaire, peuvent en être extraits dans un ordre différent de leur ordre de sortie des voies de séparation, cet ordre d'extraction étant déterminé en fonction des instants de fin d'arrivée des composants dans les moyens de stockage temporaire.

La vidange d'un moyen de stockage temporaire peut être réalisée beaucoup plus rapidement que son remplissage, ce qui permet de disposer de beaucoup de temps pour préparer la distribution des composants séparés vers les moyens de collecte correspondants ou vers les moyens de rejet.

Selon une autre caractéristique de l'invention, l'installation comprend un bras mobile unique portant les sorties des moyens de stockage temporaire, des moyens commandés de déplacement de ce bras en translation au-dessus des moyens de collecte formés par exemple par des plaques à micro-puits, des séries de tubes, des barrettes de puits de réaction ou analogues, et des troisièmes moyens commandés de liaison sélective des entrées des moyens de stockage temporaire à des moyens d'alimentation en gaz ou en liquide sous pression pour assurer le transport rapide des composants contenus dans les moyens de stockage temporaires vers les moyens de collecte ou vers les moyens de rejet.

Ce bras mobile comporte autant de sorties qu'il y a de voies de séparation dans l'installation ou en variante autant de sorties qu'il y a de moyens de stockage temporaire et ces sorties sont amenées successivement au-dessus des différents moyens de collecte pour y transférer les contenus des moyens de stockage temporaire qui sont à conserver.

Dans un mode préféré de réalisation de l'invention, les moyens de stockage temporaire comprennent, pour chaque voie de séparation, au moins deux conduits dont les entrées sont reliées en parallèle, par les premiers moyens commandés de liaison sélective, à la sortie de la voie de séparation considérée, et dont les sorties sont reliées par les seconds moyens de liaison sélective soit à des conduits portés par le bras mobile précité et menant soit vers les moyens de collecte, soit vers les moyens de rejet.

Les moyens précités de liaison sélective sont des électrovannes dans le mode de réalisation préféré de l'invention. Certains de ces moyens peuvent être constitués par des clapets chargés par des ressorts, lorsqu'ils doivent commander ou interdire un passage de fluide en fonction de la pression de ce fluide.

Selon une autre caractéristique de l'invention, lés moyens de détection comprennent des cellules de détection du passage des composants séparés dans chaque voie de l'installation, ces cellules de détection étant par exemple du type à mesure d'absorption d'un rayonnement lumineux, les moyens de détection comprenant également un appareil de mesure d'une grandeur caractéristique des composants passant dans lesdites voies, cette grandeur étant par exemple la masse moléculaire des composants, et des moyens d'alimentation de cet appareil de mesure par un train d'échantillons prélevés dans les voies de séparation.

L'appareil de mesure utilisé dans l'invention est alimenté en série par les différents composants prélevés dans les voies de séparation et est d'un type classique, beaucoup moins coûteux que celui utilisé dans le dispositif antérieur connu.

Dans le mode de réalisation préféré de l'invention, l'installation comprend des moyens commandés de prélèvement d'une quantité prédéterminée ou programmable de composant dans chaque voie de séparation, des moyens de dépôt du composant prélevé dans un conduit reliant en série les moyens de prélèvement à l'appareil de mesure, et des moyens de transport dans ledit conduit des quantités prélevées de composant vers l'appareil de mesure.

De préférence, ces moyens de transport comprennent une pompe de mise en circulation reliée à l'extrémité du conduit opposé à l'appareil de mesure.

Les moyens de prélèvement sont avantageusement constitués par des électrovannes, un moyen de prélèvement étant branché sur chaque voie de séparation et comprenant une partie mobile formée avec ou reliée à une chambre de réception d'un volume faible prédéterminé de composant, et des moyens déplaçant sélectivement cette partie mobile pour insérer la chambre de réception dans la voie de séparation ou dans le conduit menant à l'appareil de mesure.

Ces moyens de prélèvement de composant dans les différentes voies de séparation sont commandés simultanément.

Les moyens précités de commande prévus dans l'installation comprennent un système de traitement de l'information qui reçoit en entrée des signaux de sortie de l'appareil de mesure précité, représentant une grandeur caractéristique des composants passant dans les voies de séparation et les signaux de sortie des moyens de détection du passage de ces composants dans les voies de séparation, et qui génère des signaux de commande des premiers et seconds moyens de liaison sélective reliant les sorties des voies de séparation aux entrées des moyens de stockage temporaire et les sorties des moyens de stockage temporaire aux moyens de collecte ou aux moyens de rejet ainsi que des troisièmes moyens de liaison sélective des entrées des moyens de stockage temporaire aux moyens d'alimentation en gaz ou en liquide sous pression qui assurent le transport de composants contenus dans les moyens de stockage temporaire vers les moyens de collecte ou vers les moyens de rejet.

L'invention sera mieux comprise et d'autres caractéristiques, détails et avantages de celle-ci apparaîtront plus clairement à la lecture de la description qui suit, faite à titre d'exemple non limitatif en référence aux dessins annexés, dans lesquels :
- la figure 1 représente schématiquement une installation selon l'invention ;
- la figure 2 représente schématiquement les moyens d'alimentation du spectromètre de masse de l'installation de la figure 1 ;
- la figure 3 est un graphe représentant le signal de sortie d'une cellule de mesure d'absorption d'un rayonnement lumineux, montée sur une voie de séparation ;
- la figure 4a et 4b illustrent schématiquement le fonctionnement du bras mobile de distribution des composants dans les moyens de collecte, dans l'installation de la figure 1.

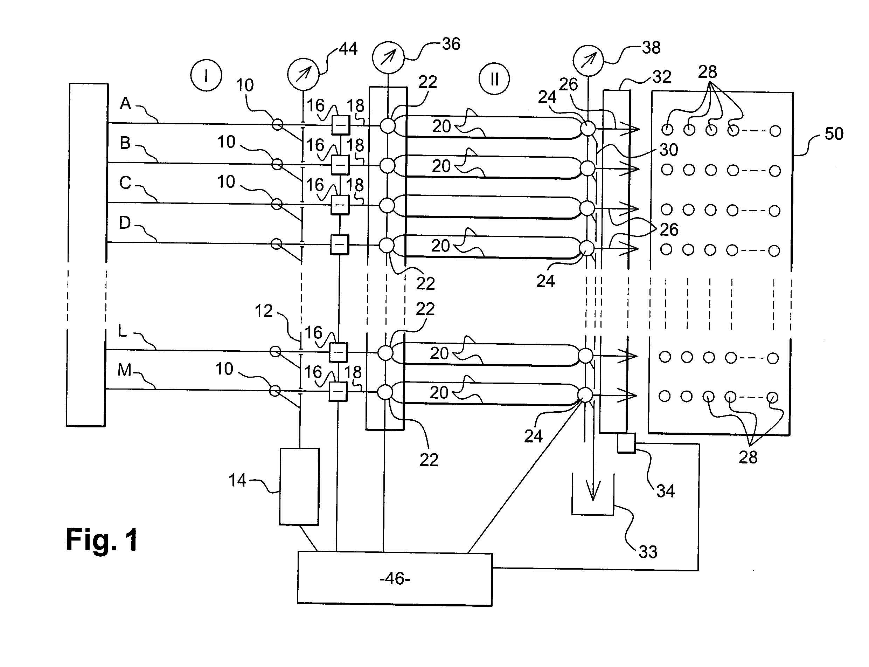

L'installation selon l'invention, qui a été représentée schématiquement en figure 1, comprend une première partie I qui est une installation de séparation des composants d'échantillons par chromatographie liquide sous pression, du type appelé habituellement HPLC ou OPLC, et une seconde partie Il qui est montée en sortie de la première partie I pour stocker temporairement les composants séparés sortant des voies de séparation de la première partie I, et pour les distribuer sélectivement vers des moyens de collecte ou des moyens de rejet ou d'évacuation à l'égout.

La première partie I comprend plusieurs voies parallèles de séparation A, B, C, D, ..., L, M dont les entrées sont alimentées en éluant et reçoivent chacune un échantillon d'un produit dont il faut séparer les divers composants, en vue notamment de la caractérisation de leur activité biologique et de leur identification.

Chaque voie de séparation A, B, C, D, ... est équipée, au voisinage de sa sortie, d'un moyen 10 de prélèvement d'une petite quantité des composants passant dans la voie de séparation et de dépôt de la quantité prélevée de composant dans un conduit 12 d'alimentation d'un appareil 14 de mesure d'une grandeur caractéristique des composants, cet appareil de mesure 14 étant d'un type qui détruit les molécules analysées, par exemple un spectromètre de masse ou un détecteur évaporatif à diffusion de lumière.

En aval du moyen 10 de prélèvement d'une petite quantité de composant, chaque voie de séparation A, B, C, D, ... est équipée d'une cellule 16 de mesure de l'absorption d'un rayonnement lumineux, tel qu'un rayonnement ultraviolet, par les composants passant dans la voie de séparation, cette cellule 16 étant d'un type bien connu de l'homme du métier et permettant de détecter le début et la fin du passage d'un composant, ainsi que sa concentration.

En aval des cellules de détection 16, les sorties 18 des voies de séparation sont reliées à des entrées de moyens parallèles 20 de stockage temporaire par des moyens commandés 22 de liaison sélective tels par exemple que des électrovannes et / ou des clapets. Chaque moyen 20 de stockage temporaire est constitué d'un tube capillaire ou analogue dont le volume est prédéterminée en fonction du plus grand volume d'un composant à stocker, les moyens de stockage temporaire associés à la sortie d'une voie de séparation comprenant un nombre n de ces tubes capillaires, n étant supérieur ou égal à 2. Les sorties des moyens de stockage temporaire 20 associés à une voie de séparation sont reliés, par des moyens commandés 24 de liaison sélective, tels que des électrovannes et / ou des clapets, soit à un conduit 26 de dépôt d'un composant dans un moyen de collecte approprié 28, soit à un conduit 30 de rejet ou d'évacuation du composant vers une poubelle 33, un égout ou analogue.

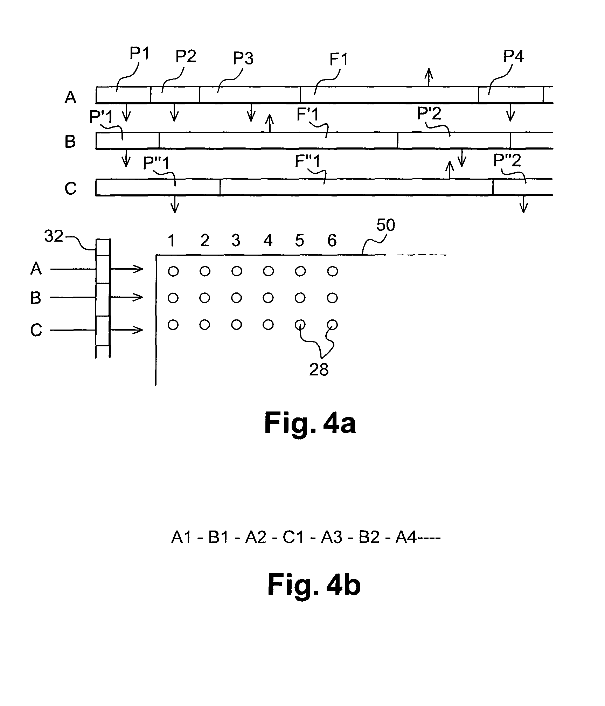

Les différents conduits 26 de dépôt des composants dans les moyens de collecte 28 sont portés par un bras mobile 32 qui est déplaçable en translation par des moyens motorisés 34 au-dessus des moyens de collecte 28 de façon à ce que le conduit 26 de dépôt associé à une voie de séparation puis au-dessus d'un moyen de collecte 28 pour y déposer un premier composant séparé sortant de la voie de séparation, puisse être amené au-dessus d'un autre moyen de collecte 28 pour y déposer un autre composant séparé sorti de la voie de séparation, et ainsi de suite, comme cela sera expliqué plus en détail en référence aux figures 4a et 4b.

En variante, les différents conduits 26 de dépôt des composants dans les moyens de collecte 28, le conduit 30 de rejet ou d'évacuation et les moyens commandés 24 de liaison sélective aux sorties des moyens 20 de stockage temporaire peuvent être portés par le bras mobile 32.

Le dépôt des composants dans les moyens de collecte 28 depuis les moyens 20 de stockage temporaire est accéléré par admission, à l'entrée des moyens 20 de stockage temporaire, d'un fluide de transport approprié, par exemple de l'air comprimé ou un liquide tel que du méthanol ou tout solvant compatible avec l'éluant, et permettant un nettoyage, ce fluide étant fourni par une source 36 de fluide sous pression par l'intermédiaire des moyens commandés 22 de liaison sélective précités.

Une source 38 d'un fluide de rinçage approprié, tel que du méthanol ou tout solvant compatible avec l'éluant et permettant le rinçage d'un conduit, est relié aux sorties des moyens 20 de stockage temporaire par l'intermédiaire de moyens commandés de liaison sélective (non représentés) pour faire passer un fluide de rinçage dans un conduit de dépôt 26 quand la sortie d'un moyen correspondant 20 de stockage temporaire est reliée au conduit 30 de rejet.

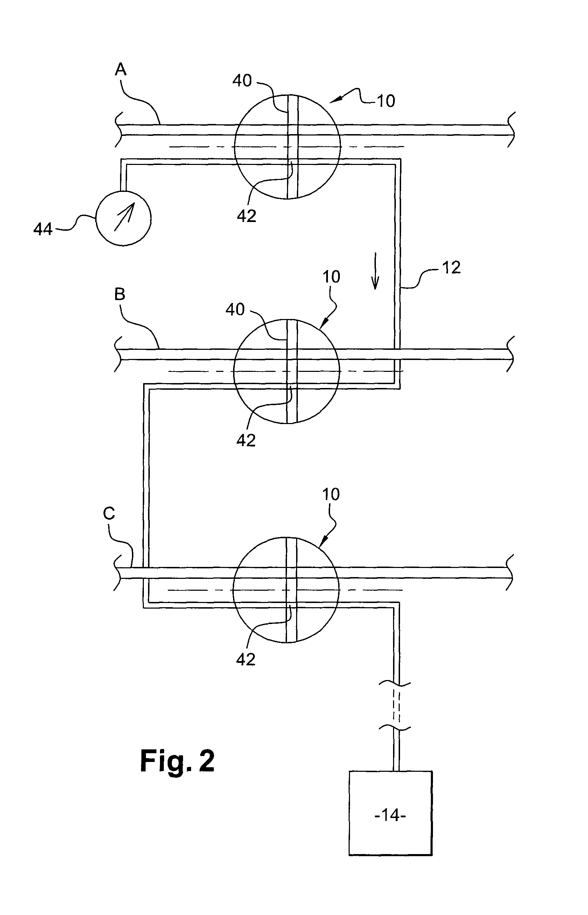

Les moyens 10 de prélèvement d'une petite quantité de composant dans les voies de séparation A, B, C, ... sont représentés plus en détail en figure 2 et comprennent chacun une électrovanne qui est branchée sur la voie de séparation correspondante A, B, C, D, ... et sur le conduit 12 d'alimentation de l'appareil de mesure 14, cette électrovanne comprenant une partie mobile 40 qui comporte une petite chambre 42 d'un volume faible prédéterminé, typiquement de un à quelques microlitres, que l'on peut insérer par commande de l'électrovanne, soit dans la voie de séparation correspondante A, B, C, D, ..., soit dans le conduit 12 d'alimentation de l'appareil de mesure 14.

En variante, pour le prélèvement de volumes plus importants dans les voies de séparation, la partie mobile 42 peut être reliée à un tube capillaire ayant la capacité voulue, à la place de la chambre 42.

Le conduit 12 est raccordé, par son extrémité opposée à l'appareil de mesure 14, à une source 44 d'un liquide approprié de transport tel que du méthanol, cette source 44 comprenant par exemple une pompe qui permet de remplir le conduit 12 du liquide de transport et de le faire circuler jusqu'à l'appareil de mesure 14.

Les moyens de prélèvement 10 sont commandés simultanément, de façon à déposer simultanément dans le conduit 12 rempli de liquide de transport les quantités de composant contenues dans les chambres 42 et qui ont été prélevées dans les voies de séparation. Toutes les électrovannes sont avantageusement commandées par un moteur unique par l'intermédiaire d'une vis sans fin ou analogue reliée aux parties mobiles 40 des électrovannes. La manoeuvre de la partie mobile 40 de chaque électrovanne 10, permet d'insérer la chambre 42 dans la voie de séparation correspondante pour la remplir du composant qui passe à ce moment dans la voie de séparation, puis de ramener la chambre 42 pour déposer la quantité de composant prélevée dans le conduit 12.

Les différentes quantités de composant qui sont déposées simultanément dans le conduit 12, forment un train de prélèvements dans lequel chaque prélèvement a un volume de un à quelques microlitres et est séparé des autres prélèvements par un volume plus important par exemple de l'ordre de 20 microlitres de liquide de transport. Un train de 4 prélèvements peut donc avoir un volume total de 100 microlitres environ. Si la capacité d'analyse de l'appareil de mesure 14 est de l'ordre de 1 millilitre par minute, ce train de prélèvements sera analysé en 6 secondes environ.

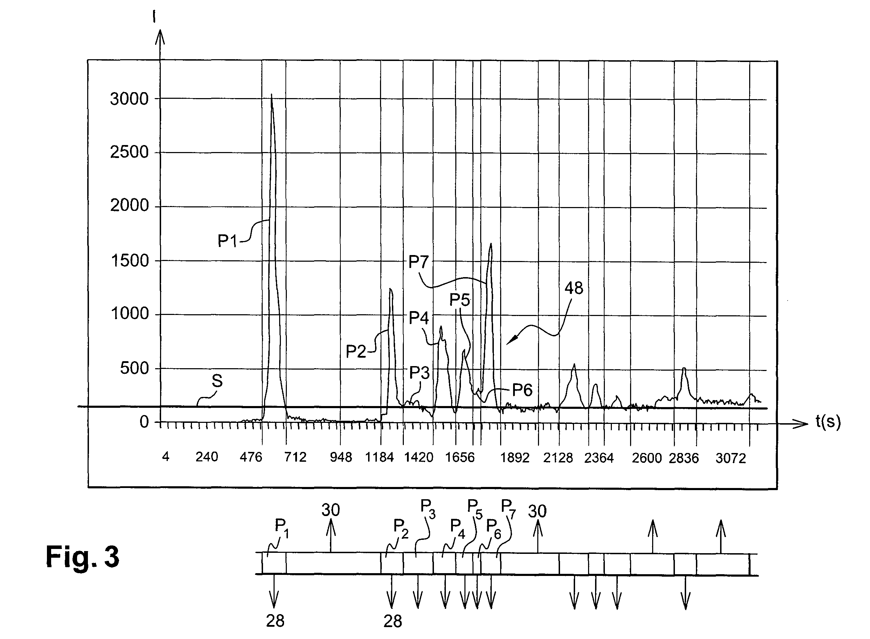

Il est donc possible d'effectuer une nouvelle série de prélèvements toutes les 6 secondes, dans cet exemple particulier. L'analyse par l'appareil de mesure 14 est quasi instantanée, de sorte que l'on peut connaître toutes les 6 secondes les valeurs d'une grandeur caractéristique, telle que la masse moléculaire, des composants qui passent dans les différentes voies de séparation au niveau des moyens de prélèvement 10. Les informations de grandeurs caractéristiques fournies par l'appareil de mesure 14 sont transmises à un système de traitement de l'information 46 qui reçoit également les signaux fournis par les cellules de mesure 16 et dont un exemple est représenté schématiquement en figure 3.

La courbe 48 de la figure 3 représente la variation dans le temps de l'absorption d'un rayonnement ultraviolet par les composants passant dans l'une des voies de séparation de l'installation selon l'invention, l'intensité de l'absorption étant indiquée en ordonnée dans des unités arbitraires et le temps étant indiqué en abscisse en secondes.

On voit que la courbe 48 présente un premier pic P1 correspondant au passage d'un premier composant dans la cellule de mesure 16, ce passage commençant à l'instant t = 476 secondes et se terminant à l'instant t = 712 secondes, l'intensité du pic correspondant à la concentration du composant.

Un second pic P2 correspond au passage d'un second composant dans la cellule de mesure 16 à partir de l'instant t = 1184 secondes, ce second composant étant suivi par d'autres composants correspondant aux parties P3, P4, P5, P6 et P7 de la courbe jusqu'à l'instant t = 1892 secondes.

Les pics sont de préférence définis par rapport à un seuil S, au-dessus duquel le signal est considéré comme correspondant au passage d'un composant dans la voie de séparation. Les parties de la courbe 48 qui sont au-dessus du seuil S correspondent aux composants que l'on va sélectionner et déposer dans les moyens de collecte 28, et les parties de la courbe se trouvant sous le seuil S correspondent aux fractions sortant de la voie de séparation que l'on va diriger vers le conduit de rejet ou d'évacuation 30.

Sur la représentation schématique de la voie de séparation qui se trouve sous la courbe 48 en figure 3, on a indiqué par des flèches dirigées vers le bas les composants sortant de la voie de séparation que l'on va déposer dans les moyens de collecte 28 et par des flèches orientées vers le haut les fractions que l'on va diriger vers le conduit de rejet 30.

Les informations reçues de l'appareil de mesure 14 et des cellules de mesure 16 par le système de traitement de l'information 46 permettent de commander les moyens de liaison sélective 22 et 24 en synchronisme avec le passage des composants et fractions en sortie des différentes voies de séparation, pour assurer le stockage temporaire de ces composants et fractions dans les moyens 20.

De façon plus détaillée, le fonctionnement est le suivant :

Les longueurs des voies de séparation entre les cellules de mesure 16 et les entrées des moyens 20 de stockage temporaire sont suffisantes pour que les informations fournies par l'appareil de mesure 14 et les cellules de mesure 16 sur le passage des composants puissent être traitées par le système 46 et que certaines opérations nécessaires soient effectuées avant que les composants arrivent en sortie des voies de séparation.

On suppose que, dans les voies de séparation A, B et C de la figure 4a les composants séparés ou fractions se succèdent dans l'ordre représenté, c'est-à-dire que des pics P1, P2 et P3 correspondant à des composants à collecter vont se succéder en sortie de la voie A, et sont suivis par une fraction F1 à rejeter, puis par un nouveau pic P4 correspondant à un composant à collecter, etc.

En sortie de la voie de séparation B, on voit arriver un premier pic P'1 correspondant à un composant à collecter, puis une fraction F'1 à rejeter suivie d'un autre pic P'2 correspondant à un composant à collecter, etc....

A la sortie de la voie de séparation C, on voit successivement passer un premier pic P "1 correspondant à un composant à collecter, une fraction F"1 à rejeter, un pic P"2 correspondant à un autre composant à collecter, etc.

Le passage du début du premier pic P1 est détecté par la cellule de mesure 16 sur la voie de séparation A et un signal correspondant est transmis au système de traitement de l'information 46 qui, au moment où le début de ce premier pic parvient au moyen 22 de liaison sélective, va commander ce dernier pour relier la sortie 18 de la voie de séparation A à l'entrée d'un premier des deux moyens 20 de stockage temporaire.

Le passage de la fin du pic P1 est détecté par la cellule de mesure 16 et transmis au système 46 de traitement de l'information qui, au moment voulu, ferme la liaison entre la sortie 18 de la voie de séparation A et l'entrée du premier moyen 20 de stockage temporaire et relie la sortie 18 de la voie A à l'entrée du second moyen 20 de stockage temporaire.

Pendant le stockage du composant correspondant au second pic P2 dans le second moyen 20, du fluide de transport sous pression est admis dans le premier moyen 20 de stockage temporaire depuis la source 36, par commande des moyens 22 de liaison sélective et la sortie du premier moyen 20 de stockage temporaire est reliée sous commande du système 46 au conduit 26 correspondant de dépôt dans un moyen de collecte 28.

Les moyens de collecte 28 peuvent être constitués par tous moyens appropriés de réception, par exemple par une plaque 50 à micro-puits (comprenant par exemple 96 micro-puits ayant chacun un volume de 2,5 millilitres), ou par une barrette de puits de réaction, ou par une série de tubes à essai, etc.

Lorsque les moyens de collecte sont formés par une plaque 50 comportant un nombre relativement important de micro-puits agencés en rangées et en colonnes, une rangée de micro-puits va être associée à la voie de séparation A, la rangée suivante de micro-puits va être associée à la voie de séparation B, et ainsi de suite, le premier composant sortant du conduit 26 associé à la voie de séparation A sera déposé dans le premier micro-puits de la rangée correspondante, le second composant sortant du conduit de dépôt 26 sera déposé dans le second micro-puits de la même rangée, et ainsi de suite, les positions des micro-puits pouvant être désignées par les références des voies de séparation associées aux rangées de micro-puits et par les numéros des colonnes de micro-puits dans la plaque. Ainsi, le premier composant collecté en sortie de la voie de séparation A sera déposé dans le micro-puits A1, le second composant collecté en sortie de cette voie sera déposé dans le micro-puits A2 et ainsi de suite.

Pour chaque dépôt d'un composant dans un moyen de collecte 28 correspondant, le bras mobile 32 portant les conduits de dépôt 26 est déplacé en translation par les moyens motorisés 34 dans une direction qui est parallèle aux directions des rangées de micro-puits associées aux voies de séparation.

Pour le dépôt du composant correspondant au pic P1 dans le micro-puits A1, le bras mobile 32 est amené en position 1 au-dessus de la plaque 50 de micro-puits. Pour le dépôt du composant correspondant au pic P2 dans le micro-puits A2, le bras mobile est amené en position 2 au-dessus de la plaque, et ainsi de suite.

De même, pour le dépôt du composant correspondant au pic P'1 de la voie de séparation B, le bras mobile 32 est amené en position 1 et dépose le composant dans le micro-puits B1, puis au moment voulu, il est amené en position 2 pour déposer le composant correspondant au pic P'2 dans le micro-puits B2 et ainsi de suite.

Lorsque l'ordre de succession des composants dans les différentes voies de séparation est celui représenté schématiquement en figure 4a, la séquence des déplacements du bras mobile 32 va être la suivante, comme représenté schématiquement en figure 4b :

Le composant correspondant au pic P1 dans la voie de séparation A est le premier à avoir été stocké temporairement et sera le premier à être déposé dans le moyen de collecte 28 correspondant (le micro-puits A1 de la plaque). C'est ensuite le composant correspondant au pic P'1 qui a été stocké temporairement dans l'un des moyens 20 associés à la voie de séparation B, qui sera déposé dans le micro-puits B1. Ensuite, c'est le composant correspondant au pic P2 dans la voie de séparation A qui sera stocké temporairement, puis déposé dans le micro-puits A2. Ensuite, c'est le composant correspondant au pic P"1 dans la voie de séparation C qui sera stocké temporairement et déposé dans le micro-puits C1, puis le composant correspondant au pic P3 dans la voie de séparation A qui sera stocké temporairement et déposé dans le micro-puits A3, puis le composant correspondant au pic P'2 dans la voie de séparation B sera stocké temporairement et déposé dans le micro-puits B2, après quoi le composant correspondant au pic P4 dans la voie de séparation A sera stocké temporairement et déposé dans le micro-puits A4, etc.

Le bras mobile 32 sera amené en position 1 pour les dépôts dans les micro-puits A1 et B1, puis en position 2 pour le dépôt dans le micro-puits A2, il sera ramené en position 1 pour le dépôt dans le micro-puits C1, amené en position 3 pour le dépôt dans le micro-puits A3, ramené en position 2 pour le dépôt dans le micro-puits B2, amené en position 4 pour le dépôt dans le micro-puits A4, etc.

Le volume de composant correspondant à un pic dans une voie de séparation est de l'ordre du millilitre. Comme le débit en sortie d'une voie de séparation est de l'ordre de 250 microlitres par minute, il faut de une à plusieurs minutes pour stocker un composant dans un moyen 20 de stockage temporaire dont le volume est typiquement compris entre 1 ou 2 et 5 millilitres.

L'extraction du composant stocké dans un moyen de stockage temporaire, résultant de l'admission d'un fluide de transport sous pression dans le moyen de stockage temporaire 20, se fait en quelques secondes. On dispose donc de beaucoup de temps après le dépôt d'un composant dans un micro-puits d'une plaque pour préparer le dépôt du composant suivant dans un autre micro-puits. Cela permet notamment de rincer les conduits de dépôt 26 du bras mobile 32 entre les dépôts successifs. Ce rinçage est réalisé par exemple, comme indiqué plus haut, par commande de moyens de liaison sélective reliant une source 38 de fluide de rinçage sous pression au conduit 26 de dépôt à nettoyer.

Avantageusement, lorsque les moyens 24 de liaison sélective relient un moyen 20 de stockage temporaire au conduit commun de rejet 30, on en profite pour relier le conduit de dépôt 26 correspondant à la source 38 de fluide de rinçage, le bras mobile 32 étant ramené pour cela dans une position 0 où les conduits de dépôt 26 ne se trouvent pas au-dessus de moyens de collecte 28, ce qui permet de récupérer le fluide de rinçage sortant des conduits 26 dans un récipient approprié.

## Revendications

1. Installation de séparation de composants, en particulier par chromatographie liquide sous pression, comprenant une pluralité de voies parallèles de séparation (A, B, C, D, ...), des moyens (16) de détection du passage des composants dans les voies de séparation et des moyens (28) de collecte d'au moins certains composants en sortie des voies de séparation, **caractérisée en ce qu'**elle comprend, entre la sortie (18) de chaque voie de séparation et les moyens de collecte (28), au moins deux moyens parallèles (20) de stockage temporaire, des premiers moyens commandés (22) de liaison sélective de la sortie (18) de ladite voie de séparation à l'entrée de l'un ou de l'autre des moyens de stockage temporaire (20), des seconds moyens commandés (24) de liaison sélective des sorties des moyens (20) de stockage temporaire aux moyens de collecte (28) ou à des moyens de rejet (30), et des moyens de commande (46) générant des signaux de commande desdits moyens de liaison sélective à partir de signaux de sortie des moyens de détection (16).

2. Installation selon la revendication 1, **caractérisée en ce qu'**elle comprend également un bras mobile (32) portant les sorties (26) des moyens (20) de stockage temporaire, des moyens commandés (34) de déplacement de ce bras en translation au-dessus des moyens de collecte (28) formés par exemple par des plaques à micro-puits, des séries de tubes, des barrettes de puits de réaction ou analogues, et des troisièmes moyens commandés de liaison sélective des entrées des moyens (20) de stockage temporaire à des moyens (36) d'alimentation en gaz ou liquide sous pression pour assurer le transport des composants contenus dans les moyens (20) de stockage temporaire vers les moyens de collecte (28) ou vers les moyens de rejet (30).

3. Installation selon la revendication 2, **caractérisée en ce que** les moyens de stockage temporaire (20) comprennent, pour chaque voie de séparation, au moins deux conduits (20) dont les entrées sont reliées en parallèle, par les premiers moyens commandés (22) de liaison sélective, à la sortie (18) de la voie de séparation et dont les sorties sont reliées par les seconds moyens commandés (24) de liaison sélective soit à des conduits (26) portés par le bras mobile (32) précité et menant aux moyens de collecte (28), soit aux moyens de rejet (30).

4. Installation selon l'une des revendications précédentes, **caractérisée en ce que** les premiers et seconds moyens commandés (22, 24) de liaison sélective comprennent des électrovannes et / ou des clapets.

5. Installation selon une des revendications précédentes, **caractérisé en ce que** les moyens de détection comprennent des cellules (16) de détection du passage des composants séparés dans chaque voie, ces cellules de détection étant par exemple du type à mesure d'absorption d'un rayonnement lumineux.

6. Installation selon l'une des revendications précédentes, **caractérisée en ce qu'**elle comprend également un appareil (14) de mesure d'une grandeur caractéristique des composants passant dans lesdites voies de séparation, telle par exemple que leur masse moléculaire, et des moyens (10, 12, 44) d'alimentation de cet appareil par un train d'échantillons des composants prélevés dans lesdites voies de séparation.

7. Installation selon la revendication 6, **caractérisée en ce qu'**elle comprend des moyens commandés (10) de prélèvement d'une quantité prédéterminée ou programmable de composant dans chaque voie de séparation, des moyens de dépôt des quantités prélevées dans un conduit (12) reliant en série les moyens de prélèvement (10) à l'appareil de mesure (14), et des moyens (44) de transport, dans ledit conduit (12), des quantités prélevées de composants vers l'appareil de mesure (14).

8. Installation selon la revendication 7, **caractérisée en ce que** les moyens de transport comprennent une pompe (44) de mise en circulation, reliée à l'extrémité du conduit (12) opposée à l'appareil de mesure (14).

9. Installation selon la revendication 7 ou 8, **caractérisée en ce que** les moyens de prélèvement comprennent des électrovannes (10).

10. Installation selon l'une des revendications 7 à 9, **caractérisée en ce qu'**un moyen de prélèvement (10) est branché sur chaque voie de séparation et comprend une partie mobile (40) formée avec ou reliée à une chambre (42) de réception d'un volume faible prédéterminé de composant, et des moyens déplaçant sélectivement cette partie mobile (40) pour insérer ladite chambre (42) dans la voie de séparation ou dans le conduit (12) menant à l'appareil de mesure (14).

11. Installation selon l'une des revendications 6 à 10, **caractérisée en ce que** l'appareil de mesure (14) est un spectromètre de masse ou un détecteur évaporatif à diffusion de lumière.

12. Installation selon l'une des revendications 7 à 11, **caractérisée en ce que** les moyens de prélèvement (10) sont commandés simultanément.

13. Installation selon l'une des revendications précédentes, **caractérisée en ce qu'**elle comprend un système (46) de traitement de l'information, qui reçoit en entrée des signaux de sortie de l'appareil de mesure (14) représentant une grandeur caractéristique des composants passant dans les voies de séparation et des signaux de sortie des moyens (16) de détection du passage de ces composants dans les voies de séparation, et qui génère des signaux de commande des moyens (22, 24) de liaison sélective reliant les sorties (18) des voies de séparation aux entrées des moyens (20) de stockage temporaire et les sorties des moyens (20) de stockage temporaire aux moyens de collecte (28) ou aux moyens de rejet (30).

14. Installation selon la revendication 13, **caractérisé en ce que** le système (46) de traitement de l'information génère en outre des signaux de commande des moyens de liaison sélective reliant une source (38) de fluide de rinçage aux sorties des moyens (20) de stockage temporaire reliées aux moyens de rejet (30).
